Europäisches Patentamt

European Patent Office

Office européen des brevets

(19)

(11) Veröffentlichungsnummer: **0 126 375**
**B1**

(12) **EUROPÄISCHE PATENTSCHRIFT**

(45) Veröffentlichungstag der Patentschrift:
17.09.86

(51) Int. Cl.⁴: **H 04 N 11/04**

(21) Anmeldenummer: **84105202.0**

(22) Anmeldetag: **08.05.84**

(54) Verfahren zur Übertragung von digitalen Luminanz- und Chrominanzsignalen des Fernsehens.

(30) Priorität: **10.05.83 DE 3317115**

(43) Veröffentlichungstag der Anmeldung:
**28.11.84 Patentblatt 84/48**

(45) Bekanntmachung des Hinweises auf die Patenterteilung:
**17.09.86 Patentblatt 86/38**

(84) Benannte Vertragsstaaten:
**AT BE CH DE FR GB IT LI NL SE**

(56) Entgegenhaltungen:
**DE - A - 2 246 507**
**DE - A - 2 434 471**

**SMPTE JOURNAL, Band 89, Nr. 4, April 1980, Seiten 244-248, Scarsdale, US; R. BURKHARDT et al.: "Digital television transmission with 34 Mbit/s"**
**Interim Report III/81, Independent Broadcasting Authority**

(73) Patentinhaber: **Siemens Aktiengesellschaft Berlin und München, Wittelsbacherplatz 2, D-8000 München 2 (DE)**

(72) Erfinder: **Starck, Alexander, Dipl.-Phys., Terhallestrasse 45, D-8000 München 90 (DE)**

## Beschreibung

Die Erfindung bezieht sich auf ein Verfahren und eine Anordnung zum Übertragen von digitalen Luminanz- und Chrominanzsignalen des Fernsehens, bei denen die Abtastwerte beinhaltenden PCM-Codewörter jeder Bildzeile nach einem vorgegebenen Muster entweder PCM-Codewörter bleiben oder in kürzere DPCM-Codewörter umgesetzt werden.

Dieses Verfahren ist aus dem Interim Report 111/81, „Bit Rate Reduction to 140-Mbit/s from a Television Component Standard Requiring 216-228 Mbit/s", Wilson, Independent Broadcasting Authority, Crawley Court, Winchester, Hants. SO21 2QA, bekannt und wird als Hybrid-DPCM bezeichnet. PCM ist die Abkürzung für Pulscodemodulation und DPCM die für Differenz-Pulscodemodulation.

Bei einer digitalen Übertragung von Fernsehsignalen stellt sich grundsätzlich die Frage nach der geeigneten Codierung. Soll ein Farbfernsehsignal, das im Studio mit 13,5 MHz Taktfrequenz und 8 bit pro Abtastwert verarbeitet wird, über digitale Kanäle mit einer Datenrate von 140 Mbit/s übertragen werden, so muss entweder die Taktfrequenz oder die Zahl der Bits pro Bildpunkt verringert werden. Wird die Taktfrequenz für die Luminanz auf 11,25 MHz herabgesetzt, so muss noch zusätzlich, um 140 Mbit/s zu unterschreiten, die Chrominanzauflösung in vertikaler Richtung reduziert werden, was die Bildqualität sichtbar beeinträchtigen könnte.

Mit Hilfe einer DPCM, bei der jeder Bildpunkt mit 6 Bits codiert würde, liesse sich die räumliche Auflösung beibehalten. Ein Nachteil dieser Codierung ist aber die erhöhte Anfälligkeit gegenüber Übertragungsstörungen und die bei diesen hohen Taktfrequenzen problematische Realisierbarkeit.

Mit der bekannten Hybrid-DPCM lässt sich die Anfälligkeit gegenüber Übertragungsstörungen vermindern. Da als Schätzwert für die Bildung der DPCM-Codewörter aber ein gewichtetes Mittel aus mehreren in unverändert bleibenden PCM-Codewörtern enthaltenen Abtastwerten dient, wird der Aufwand jedoch nicht verringert.

Aufgabe der Erfindung ist es, die Anfälligkeit gegen Übertragungsstörungen mit geringerem Aufwand zu vermindern.

Ausgehend von einem Verfahren der eingangs geschilderten Art wird diese Aufgabe erfindungsgemäss dadurch gelöst, dass ein Muster gewählt wird, bei dem sendeseitig beiderseits jedes bleibenden PCM-Codeworts wenigstens in horizontaler Richtung ein nur diesem zugeordnetes DPCM-Codewort erzeugt wird, dass die DPCM-Codewörter aus der Differenz zwischen dem Abtastwert des unmittelbar horizontal, vertikal oder diagonal benachbarten, in ein PCM-Codewort umgesetzten Abtastwerts und dem aktuellen Abtastwert gebildet werden, dass die PCM-Codewörter und die DPCM-Codewörter bildzeilenweise zu einem ersten Zeitmultiplexsignal verschachtelt und übertragen werden, dass die PCM- und DPCM-Codewörter empfangsseitig wieder getrennt werden, dass die DPCM-Codewörter in PCM-Codewöter rückumgesetzt werden und dass die unveränderten un die rückumgesetzten PCM-Codewörter bildzeilenweise zu einem zweiten Zeitmultiplexsignal verschachtelt werden.

Die PCM-Codewörter können achtstellig und die DPCM-Codewörter fünfstellig sein. Letztere können ohne Vorzeichen übertragen werden, weil diese im Empfänger ergänzt werden können, da die den DPCM-Codewörtern zugeordneten Abtastwerte im Wertebereich liegen müssen („NTZ", 1974, Heft 3, Seiten 115-117). Trifft ein Fehler ein DPCM-Codewort, so wird nur der zugehörige Bildpunkt verfälscht. Trifft der Fehler das PCM-Codewort, so werden neben dem zugehörigen Bildpunkt auch benachbarte, von seinem Abtastwert abhängige Punkte verfälscht.

Eine sendeseitige Anordnung zur Durchführung des erfindungsgemässen Verfahrens mit Zuordnung nur in horizontaler Richtung ist dadurch gekennzeichnet, dass eingangsseitig eine Kette aus einem ersten invertierenden Register und einem zweiten invertierenden Register vorgesehen ist, dass ein erster Addierer vorgesehen ist, dessen erste Eingänge mit den Eingängen und dessen zweite Eingänge mit den Ausgängen des ersten invertierenden Registers verbunden sind, dass ein erstes Register vorgesehen ist, dessen Eingänge mit den Ausgängen des ersten Addierers verbunden sind, dass ein erster DPCM-Codierer vorgesehen ist, dessen Eingänge mit den Ausgängen des ersten Registers verbunden sind, dass ein zweiter Addierer vorgesehen ist, dessen erste Eingänge mit den Eingängen und dessen zweite Eingänge mit den Ausgängen des zweiten invertierenden Registers verbunden sind, dass ein zweites Register vorgesehen ist, dessen Eingänge mit den Ausgängen des zweiten Addierers verbunden sind, dass ein zweiter DPCM-Codierer vorgesehen ist, dessen Eingänge mit den Ausgängen des zweiten Registers verbunden sind, dass ein Parallel-Seriellregister vorgesehen ist, dessen Eingänge mit den Ausgängen des zweiten invertierenden Schieberegisters des ersten DPCM-Codierers und des zweiten DPCM-Codierers verbunden sind und dessen Ausgang als Ausgang der sendeseitigen Anordnung dient.

Eine empfangsseitige Anordnung zur Durchführung des erfindungsgemässen Verfahrens mit Zuordnungen nur in horizontaler Richtung ist dadurch gekennzeichnet, das ein Seriell-Parallel-Register vorgesehen ist, dessen Eingang als Eingang der sendeseitigen Anordnung dient, dass ein drittes Register vorgesehen ist, dessen Eingänge mit Ausgängen des Seriell-Parallel-Registers verbunden sind, dass ein erster DPCM-Decodierer vorgesehen ist, dessen Eingänge mit weiteren Ausgängen des Seriell-Parallel-Registers verbunden sind, dass ein viertes Register vorgesehen ist, dessen Eingänge mit den Ausgängen des ersten DPCM-Decodierers verbunden sind, dass ein dritter Addierer vorgesehen ist, dessen erste Eingänge mit den Ausgängen des vierten Registers und dessen zweite Eingänge mit den Ausgängen des dritten Registers verbunden sind, dass ein zweiter DPCM-Decodierer vorgesehen ist, dessen Eingänge mit den restlichen Ausgängen des Seriell-Parallel-Registers verbunden sind, dass ein fünftes Register vorgesehen ist, dessen Eingänge mit den Ausgängen des zweiten DPCM-Decodierers verbunden sind, dass ein vierter Addierer vorgesehen ist, dessen erste Eingänge mit den Ausgängen des fünften Registers und dessen zweite Eingänge mit den Ausgängen des dritten Registers verbunden sind und dass ein Multiplexer vorgesehen ist, der eingangsseitig mit den Ausgängen des dritten Registers, des dritten Addierers und des vierten Addierers verbunden ist und dessen Ausgang als Ausgang der empfangsseitigen Anordnung dient.

Da weder beim Sender noch beim Empfänger Schleifen vorhanden sind, kann die Verarbeitung mit einer relativ langsamen Technologie erfolgen.

Ein zusätzlicher Vorteil dieses Verfahrens besteht darin, dass sich die Codierung und Decodierung ohne Probleme mehrfach hintereinander durchführen lässt. Wenn nämlich an Kanten im Bild eine Differenz grobquantisiert wird, so kann zu dem decodierten Bildpunkt vor der nächsten Codierung ein Fehler von bis zu der halben Stufenhöhe zukommen. Die Differenz wird dann bei der nächsten Codierung trotzdem zum selben Wert quantisiert wie bei der ersten Codierung.

Anhand von Ausführungsbeispielen wird die Erfindung nachstehend näher erläutert.

Fig. 1 zeigt einen erfindungsgemässen Sendeteil und

Fig. 2 zeigt einen erfindungsgemässen Empfangsteil.

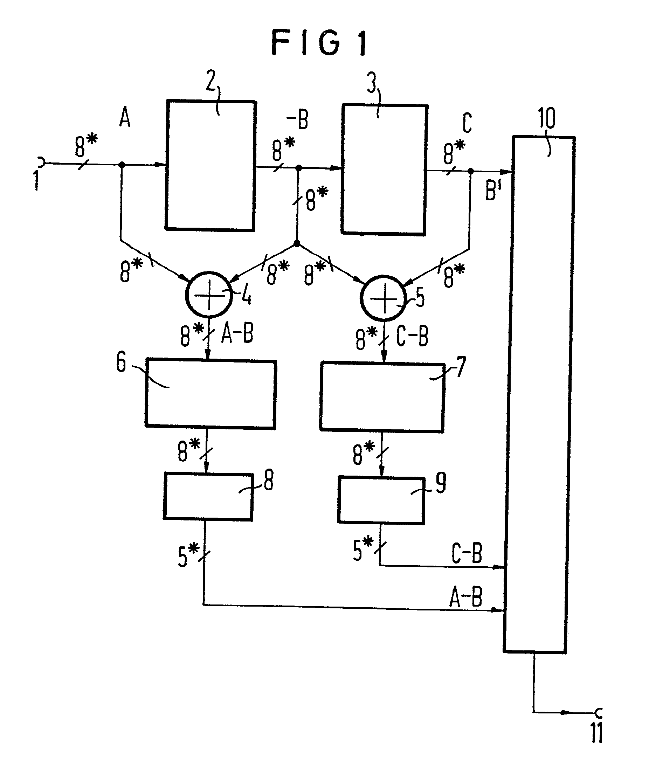

Der Sendeteil nach Fig. 1 enthält einen Eingang 1, invertierende Register 2 und 3, Addierer 4 und 5, Register 6 und 7, DPCM-Codierer 8 und 9, ein Parallel-Seriellregister 10 und einen Ausgang 11. Die mit einem Stern markierten Ziffern geben an, wie viele Leitungen parallel laufen.

Die PCM-Codewörter einer Bildzeile werden in den Eingang 1 parallel eingespeist. Im dargestellten Zustand liegt am Eingang des invertierenden Registers 2 ein PCM-Codewort mit der Abstastprobe A, am Eingang des invertierenden Registers 3 ein PCM-Codewort mit dem Abtastwert B und am Ausgang des invertierenden Registers 3 ein PCM-Codewort mit dem Abtastwert C. Der Addierer 4 bildet ein Codewort mit dem Amplitudenwert A-B und der Addierer 5 ein Codewort mit dem Amplitudenwert C-B. Diese Codewörter gelangen in die Register 6 bzw. 7 und werden anschliessend in dem Codewortumsetzer (Quantisierer) 8 bzw. 9 in fünfstellige DPCM-Codwörter umgesetzt. Das Parallel-Seriell-Register 10 bildet aus dem unveränderten PCM-Codewort und den neu gebildeten DPCM-Codewörtern, sobald alle anliegen, ein Zeitmultiplexsignal, das am Ausgang 11 entnehmbar ist. Dieses Parallel-Seriell-Register 10 wird immer dann geladen, wenn am ersten Eingang das PCM-Codewort für den Bildpunkt B (zur zeitlichen Abgrenzung gegen C mit B′ bezeichnet) und an den anderen Eingängen die beiden DPCM-Codewörter für A-B und C-B anliegen.

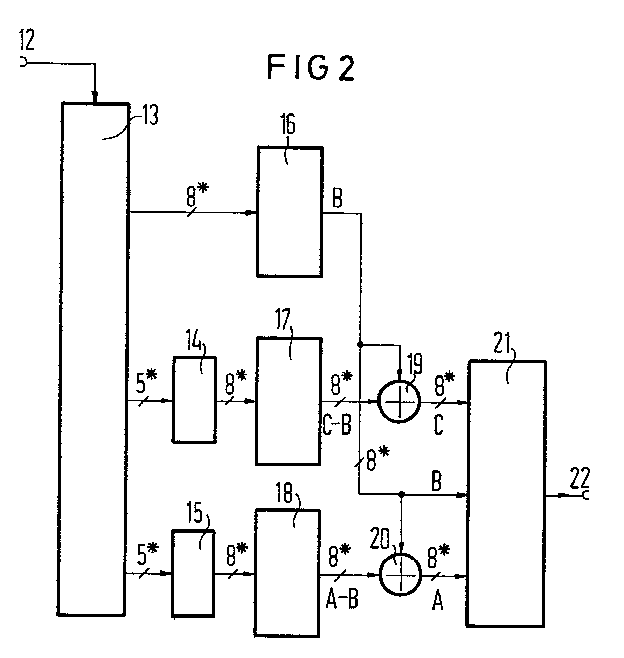

Fig. 2 zeigt den Empfangsteil mit einem Eingang 12, mit einem Seriell-Parallel-Register 13, mit ROM's enthaltende DPCM-Decodierer 14 und 15, mit Registern 16, 17 und 18, mit Addierern 19 und 20, mit einem Multiplexer 21 und mit einem Ausgang 22.

Das vom Ausgang 11 des Sendeteils in Fig. 1 abgegebene Zeitmultiplexsignal wird dem Eingang 12 des Empfangsteils nach Fig. 2 zugeführt. Von dort gelangt es in das Seriell-Parallel-Register 13, das das PCM-Codewort und die DPCM-Codewörter trennt. Das PCM-Codewort gelangt zum Register 16, während die DPCM-Codewörter in den DPCM-Decodierern 14 und 15 decodiert und als Differenz-Codewörter C-B bzw. A-B den Registern 17 und 18 zugeführt werden. Der Addierer 19 addiert das PCM-Codewort mit dem Abtastwert B am Ausgang des Registers 16 und das Differenz-Codewort am Ausgang des Registers 17 mit dem Amplitudenwert C-B und gibt ein PCM-Codewort mit dem Abtastwert C ab.

Der Addierer 20 addiert das PCM-Codewort mit dem Abtastwert B am Ausgang des Registers 16 und das Differenz-Codewort am Ausgang des Registers 18 mit dem Amplitudenwert A-B und gibt ein PCM-Codewort mit dem Abtastwert A ab. Der Multiplexer 21 verschachtelt die PCM-Codewörter mit den Abtastwerten A, B und C zu einem Zeitmultiplexsignal, das am Ausgang 22 abgenommen werden kann.

Das Ausführungsbeispiel ist beispielsweise mit folgenden handelsüblichen integrierten Schaltungen realisiert:

| Bezugszeichen | Integrierte Schaltung |
|---|---|
| 2, 3 | 74ALS 534 |
| 4, 5, 19, 20 | 2·74 LS 283 |
| 6, 7, 16, 17, 18 | 74 LS 273 |
| 8, 9 | TBP 18 S 22 |
| 10 | 3·74 LS 166 A |
| 13 | 3·74 LS 164 |
| 14, 15 | TBP 18 S 030 |
| 21 | 2·74 LS 604 |

**Patentansprüche**

1. Verfahren zum Übertragen von digitalen Luminanz- und Chrominanzsignalen des Fernsehens, bei denen die Abtastwerte beinhaltenden PCM-Codewörter jeder Bildzeile nach einem vorgegebenen Muster entweder PCM-Codewörter bleiben oder in kürzere DPCM-Codewörter umgesetzt werden, dadurch gekennzeichnet,

dass ein Muster gewählt wird, bei dem sendeseitig beiderseits jedes bleibenden PCM-Codeworts wenigstens in horizontaler Richtung ein nur diesem zugeordnetes DPCM-Codewort erzeugt wird,

dass die DPCM-Codewörter aus der Differenz zwischen dem Abtastwert des unmittelbar horizontal, vertikal oder diagonal benachbarten, in ein PCM-Codewort umgesetzten Abtastwerts und dem aktuellen Abtastwert gebildet werden,

dass die PCM-Codewörter und die DPCM-Codewörter bildzeilenweise zu einem ersten Zeitmultiplexsignal verschachtelt und übertragen werden,

dass die PCM- und DPCM-Codewörter empfangsseitig wieder getrennt werden, dass die DPCM-Codewörter in PCM-Codewörter rückumgesetzt werden und

dass die unveränderten und die rückumgesetzten PCM-Codewörter bildzeilenweise zu einem zweiten Zeitmultiplexsignal verschachtelt werden.

2. Sendeseitige Anordnung zur Durchführung des Verfahrens nach Anspruch 1 mit Zuordnungen nur in horizontaler Richtung, dadurch gekennzeichnet,

dass eingangsseitig eine Kette aus einem ersten invertierenden Register (2) und einem zweiten invertierenden Register (3) vorgesehen ist,

dass ein erster Addierer (4) vorgesehen ist, dessen erste Eingänge mit den Eingängen und dessen zweite Eingänge mit den Ausgängen des ersten invertierenden Registers (2) verbunden sind,

dass ein erstes Register (6) vorgesehen ist, dessen Eingänge mit den Ausgängen des ersten Addierers (4) verbunden sind,

dass ein erster DPCM-Codierer (8) vorgesehen ist, dessen Eingänge mit den Ausgängen des ersten Registers (6) verbunden sind,

dass ein zweiter Addierer (5) vorgesehen ist, dessen erste Eingänge mit den Eingängen und dessen zweite Eingänge mit den Ausgängen des zweiten invertierenden Registers (3) verbunden sind,

dass ein zweites Register (7) vorgesehen ist, dessen Eingänge mit den Ausgängen des zweiten Addierers (5) verbunden sind,

dass ein zweiter DPCM-Codierer (9) vorgesehen ist, dessen Eingänge mit den Ausgängen des zweiten Registers (7) verbunden sind,

dass ein Parallel-Seriellregister (10) vorgesehen ist, dessen Eingänge mit den Ausgängen des zweiten invertierenden Schieberegisters (3) des ersten DPCM-Codierers (8) und des zweiten DPCM-Codierers (9) verbunden sind und dessen Ausgang (11) als Ausgang der sendeseitigen Anordnung dient.

3. Empfangsseitige Anordnung zur Durchführung des Verfahrens nach Anspruch 1 mit Zuordnungen nur in horizontaler Richtung, dadurch gekennzeichnet,

dass ein Seriell-Parallel-Register (13) vorgesehen ist, dessen Eingang (12) als Eingang der sendeseitigen Anordnung dient,

dass ein drittes Register (16) vorgesehen ist, dessen Eingänge mit Ausgängen des Seriell-Parallel-Registers (13) verbunden sind,

dass ein erster DPCM-Decodierer (14) vorgesehen ist, dessen Eingänge mit weiteren Ausgängen des Seriell-Parallel-Registers (13) verbunden sind,

dass ein viertes Register (17) vorgesehen ist, dessen Eingänge mit den Ausgängen des ersten DPCM-Decodierers (14) verbunden sind,

dass ein dritter Addierer (19) vorgesehen ist, dessen erste Eingänge mit den Ausgängen des vierten Registers (17) und dessen zweite Eingänge mit den Ausgängen des dritten Registers (16) verbunden sind,

dass ein zweiter DPCM-Decodierer (15) vorgesehen ist, dessen Eingänge mit den restlichen Ausgängen des Seriell-Parallel-Registers (13) verbunden sind,

dass ein fünftes Register (18) vorgesehen ist, dessen Eingänge mit den Ausgängen des zweiten DPCM-Decodierers (15) verbunden sind,

dass ein vierter Addierer (20) vorgesehen ist, dessen erste Eingänge mit den Ausgängen des fünften Registers (18) und dessen zweite Eingänge mit den Ausgängen des dritten Registers (16) verbunden sind und

dass ein Multiplexer (21) vorgesehen ist, der eingangsseitig mit den Ausgängen des dritten Register (16) des dritten Addierers (19) und des vierten Addierers (20) verbunden ist, und dessen Ausgang (22) als Ausgang der empfangsseitigen Anordnung dient.

## Claims

1. A method of transmitting digital luminance and chrominance television signals in which, in accordance with a predetermined pattern, the PCM code words – which contain sample values – of each picture line either remain PCM code words or are converted into shorter DPCM code words, characterised in that a pattern is selected in accordance with which, at the transmitting end, on both sides of each remaining PCM code word, at least in the horizontal direction, a DPCM code word is generated which is assigned only to this PCM code word,

that the DPCM code words are formed from the difference between the sample value of the sample value which is directly adjacent either horizontally, vertically or diagonally and which has been converted into a PCM code word, and the current sample value,

that the PCM code words and the DPCM code words are interleaved picture line by picture line to form a first t.d.m. signal and are transmitted,

that the PCM- and DPCM-code words are separated again at the receiving end,

that the DPCM code words are reconverted into PCM code words and that the unchanged PCM code words and the reconverted PCM code words are interleaved picture line by picture line to form a second t.d.m. signal.

2. A transmitting-end arrangement for carrying out the method claimed in claim 1, with assignments only in the horizontal direction, characterised in that a chain is provided at the input end comprising a first inverting register (2) and a second inverting register (3),

that a first adder (4) is provided, the first inputs of which are connected to the inputs of the first inverting register (2) and the second inputs of which are connected to the outputs of said register,

that a first register (6) is provided, the inputs of which are connected to the outputs of the first adder (4),
that a first DPCM-coder (8) is provided, the inputs of which are connected to the outputs of the first register (6),
that a second adder (5) is provided, the first inputs of which are connected to the inputs of the second inverting register (3) and the second inputs of which are connected to the outputs of said register,
that a second register (7) is provided, the inputs of which are connected to the outputs of the second adder (5),
that a second DPCM-coder (9) is provided, the inputs of which are connected to the outputs of the second register (7),
that a parallel-series register (10) is provided, the inputs of which are connected to the outputs of the second inverting shift register (3) of the first DPCM-coder (8) and of the second DPCM-coder (9) and the output (11) of which serves as output of the transmitting-end arrangement.

3. A receiving-end arrangement for carrying out the method claimed in claim 1, with assignments only in the horizontal direction,
characterised in that a series-parallel register (13) is provided, the input (12) of which serves as input of the transmitting-end arrangement,
that a third register (16) is provided, the inputs of which are connected to outputs of the series-parallel register (13),
that a first DPCM-decoder (14) is provided, the inputs of which are connected to further outputs of the series-parallel register (13),
that a fourth register (17) is provided, the inputs of which are connected to the outputs of the first DPCM-decoder (14),
that a third adder (19) is provided, the first inputs of which are connected to the outputs of the fourth register (17) and the second inputs of which are connected to the outputs of the third register (16),
that a second DPCM-decoder (15) is provided, the inputs of which are connected to the remaining outputs of the series-parallel register (13),
that a fifth register (18) is provided, the inputs of which are connected to the outputs of the second DPCM-decoder (15),
that a fourth adder (20) is provided, the first inputs of which are connected to the outputs of the fifth register (18) and the second inputs of which are connected to the outputs of the third register (16) and
that a multiplexer (21) is provided which is connected at its inputs to the outputs of the third register (16) of the third adder (19) and of the fourth adder (20) and whose output (22) serves as output of the receiving-end arrangement.

**Revendications**

1. Procédé pour la transmission de signaux numériques de la luminance et de la chrominance de la télévision, dans lesquels les mots de code PCM de chaque ligne, qui contiennent les valeurs de balayage, restent, suivant un modèle prédéterminé, soit des mots de code PCM ou sont convertis en des mots de code DPCM plus courts, caractérisé par le fait
— que l'on choisit un modèle pour lequel on produit, du côté émission et des deux côtés du mot de code PCM qui subsiste, au moins dans le sens horizontal, un mot de code DPCM qui n'est associé qu'à ce dernier,
— que les mots de code DPCM sont formés par la différence entre la valeur de balayage de la valeur de balayage directement voisine dans le sens horizontal, vertical ou diagonal et convertis en un mot de code PCM,
— que les mots de code PCM et les mots de code DPCM sont imbriqués, ligne par ligne d'image, en un premier signal à multiplexage temporel et sont retransmis,
— que les mots de code PCM et DPCM sont à nouveau séparés du côté réception,
— que les mots de code DPCM sont reconvertis en des mots de code PCM, et
— que les mots de code PCM inchangés et reconvertis sont imbriqués ligne par ligne d'image pour former un second signal à multiplexage temporel.

2. Dispositif, côté émission, pour la mise en œuvre du procédé selon la revendication 1, avec coordination uniquement dans le sens horizontal, caractérisé par le fait
— que, du côté entrée, on prévoit une chaîne qui est constituée par un premier registre inverseur (2) et par un second registre inverseur (3),
— qu'il est prévu un premier additionneur (4) dont les premières entrées sont reliées aux entrées des premiers registres inverseurs (2) et que dans les secondes entrées sont reliées aux sorties du premier registre inverseur (2),
— qu'il est prévu un premier registre (6) dont les entrées sont reliées aux sorties du premier additionneur (4),
— qu'il est prévu un premier codeur DPCM (8) dont les entrées sont reliées aux sorties du premier registre (6),
— qu'il est prévu un second additionneur (5) dont les premières entrées sont reliées aux entrées du second registre inverseur (3) et dont les secondes entrées sont reliées aux sorties dudit second registre inverseur (3),
— qu'il est prévu un second registre (7) dont les entrées sont reliées aux sorties du second additionneur (5),
— qu'il est prévu un second codeur DPCM (9) dont les entrées sont reliées aux sorties du second registre (7),
— qu'il est prévu un registre parallèle-série (10) dont les entrées sont reliées aux sorties du second registre à décalage inverseur (3) du premier codeur DPCM (8) et du second codeur DPCM (9), et dont la sortie (11) sert de sortie pour le dispositif côté émission.

3. Dispositif, côté réception, pour la mise en œuvre du procédé selon la revendication 1, avec coordination seulement dans le sens horizontal, caractérisé par le fait

— qu'il est prévu un registre série-parallèle (13) dont l'entrée (12) sert d'entrée pour le dispositif côté émission,

— qu'il est prévu un troisième registre (16) dont les entrées sont reliées aux sorties du registre série-parallèle (13),

— qu'il est prévu un premier décodeur DPCM (14) dont les entrées sont reliées avec d'autres sorties du registre série-parallèle (13),

— qu'il est prévu un quatrième registre (17) dont les entrées sont reliées aux sorties du premier décodeur DPCM (14),

— qu'il est prévu un troisième additionneur (19) dont les premières entrées sont reliées aux sorties du quatrième registre (17) et dont les secondes entrées sont reliées aux sorties du troisième registre (16),

— qu'il est prévu un second décodeur DPCM (15) dont les entrées sont reliées avec les sorties restantes du registre série-parallèle (13), et

— qu'il est prévu un cinquième registre (18) dont les entrées sont reliées aux sorties du second décodeur DPCM (15),

— qu'il est prévu un quatrième additionneur (20) dont les premières entrées sont reliées aux sorties du cinquième registre (18) et dont les secondes entrées sont reliées aux sorties du troisième registre (16), et

— qu'il est prévu un multiplexeur (21) qui, du côté entrée, est relié aux sorties du troisième registre (16) du troisième additionneur (19) et du quatrième additionneur (20), et dont la sortie (22) sert de sortie du dispositif côté réception.

# F I G 1

# FIG 2